(19) Europäisches Patentamt
European Patent Office
Office européen des brevets

(11) Veröffentlichungsnummer: **0 154 153**
**B1**

(12) # EUROPÄISCHE PATENTSCHRIFT

(45) Veröffentlichungstag der Patentschrift: **01.08.90**

(51) Int. Cl.$^5$: **A 01 N 25/32**

(21) Anmeldenummer: **85100867.2**

(22) Anmeldetag: **29.01.85**

(54) **Verwendung von Aryloxy-Verbindungen als Antidots.**

(30) Priorität: **08.02.84 DE 3404401**

(43) Veröffentlichungstag der Anmeldung:
**11.09.85 Patentblatt 85/37**

(45) Bekanntmachung des Hinweises auf die Patenterteilung:
**01.08.90 Patentblatt 90/31**

(84) Benannte Vertragsstaaten:
**AT BE DE FR GB IT NL SE**

(56) Entgegenhaltungen:
**EP-A-0 031 938**
**EP-A-0 088 066**
**EP-A-0 112 799**
**US-A-4 062 670**

**CHEMIE DER PFLANZENSCHUTZ- UND SCHÄDLINGS-BEKÄMPFUNGSMITTEL, Band 8, 1982, Seiten 1-25, Springer Verlag, Berlin, DE; H.J. NESTLER: "Phenoxy-phenoxypropionic acid derivatives and related compounds"**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Handte, Reinhard, Dr.**
**Theilweg 23**
**D-8901 Gablingen (DE)**
Erfinder: **Mildenberger, Hilmar, Dr.**
**Fasanenstrasse 24**
**D-6233 Kelkheim (Taunus) (DE)**
Erfinder: **Bauer, Klaus, Dr.**
**Kolpingstrasse 7**
**D-6054 Rodgau (DE)**
Erfinder: **Bieringer, Hermann, Dr.**
**Eichenweg 26**
**D-6239 Eppstein/Taunus (DE)**

**EP 0 154 153 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft die Verwendung von Aryloxyderivativen zum Schutzen von Kulturpflanzen gegen schadigende Nebenwirkungen von Agrarchemikalien.

Bei der Anwendung von Pflanzenbehandlungsmitteln, insbesondere bei der Anwendung von Herbiziden, können unerwünschte Schäden bei den behandelten Kulturpflanzen auftreten. Besonders bei der Applikation von Herbiziden nach dem Auflaufen der Kulturpflanzen besteht daher oft das Bedürfnis, das Risiko einer möglichen Phytotoxizität zu vermeiden. Zu diesem Zweck wurden bereits zwei Gruppen von Aryloxy-Verbindungen, nämlich Nitrile und Amidoxime, als sogenannte "Safenener" oder "Antidots" vorgeschlagen (vgl. EP—A—31 938). EP—A—86 750 beschreibt Antidots, die sich von den genannten nur dadurch unterschieden, daß sie anstelle des Arylrestes einen Chinolinrest enthalten.

Es wurde nun gefunden, daß die pflanzenschützenden Eigenschaften der in den genannten Anmeldungen genannten Verbindungen nicht an die spezielle Nitril- und Amidoximfunktion gebunden sind; vielmehr zeigte sich, daß die Antidot-Wirkung auch bei Aryloxy-Verbindungen mit anderen funktionellen Gruppen ausgeprägt ist.

Gegenstand der vorliegenden Erfindung ist daher die Verwendung von Aryloxyverbindungen der Formel

$$Ar—O—A—Z \qquad (I),$$

als Safener für Fenoxaprop-ethyl, wobei die einzelnen Reste folgende Bedeutungen haben:

Ar ein Phenyl- oder Naphthylrest, der jeweils ein- bis zweifach durch gleiche oder verschiedene Halogenatome und/oder ein- oder zweifach durch ($C_1$—$C_4$)-Alkyl oder ($C_1$—$C_4$)-Alkoxy substituent sein; kann;

A $—CH_2—$ oder $—CH(CH_3)—$

Z ein Rest der Formel

$-COOR^1$, $-COO-A-COOR^1$, $-COSR^2$, 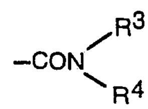, $-CONCS$, $-CONHOH$,

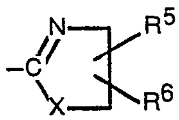, 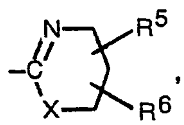, 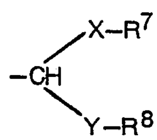, 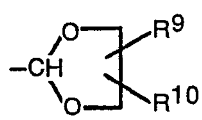 oder $CH_2-W$;

$R^1$ H; geradkettiges oder verzweigtes ($C_1$—$C_{12}$)-Alkyl, das gegebenenfalls ein- bis dreifach durch Fluor, Chlor oder Brom und/oder ein- oder zweifach durch CN, SCN, OH, ($C_1$—$C_6$)-Alkoxy, ($C_1$—$C_4$)-Alkylthio, ($C_1$—$C_4$)-Alkylsulfinyl, ($C_1$—$C_4$)-Alkylsulfonyl, ($C_1$—$C_6$)-Alkoxy-($C_2$—$C_6$)-alkoxy, Halogenalkoxy, Methoxyethoxyethoxy, ($C_1$—$C_4$)-Alkylamino, Di($C_1$—$C_4$)-Alkylamino oder ($C_1$—$C_4$)-Alkylcarbonyl, einen drei- bis siebengliedrigen, gegebenenfalls benzokondensierten und/oder durch Halogen bzw. ($C_1$—$C_4$)-Alkyl substituierten gesättigten oder ungesättigten heterocyclischen Rest mit bis zu drei gleichen oder verschiedenen Heteroatomen (S, O oder N) oder einen gegebenenfalls ein- oder zweifach durch Fluor, Chlor, Brom und/oder ($C_1$—$C_4$)-Alkyl substituierten Phenyl-, Phenoxy- oder Benzyloxyrest substituiert ist; ($C_5$—$C_6$)-Cycloalkyl, ($C_3$—$C_6$)-Alkenyl oder ($C_3$—$C_6$)-Alkinyl; Phenyl, das gegebenenfalls ein- bis zweifach durch ($C_1$—$C_4$)-Alkyl, ($C_1$—$C_4$)-Alkoxy, Halogen oder $CF_3$ substituiert ist; die Gruppe

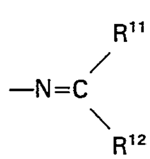

oder ein Kationäquivalent einer organischen oder anorganischen Base;

$R^2$ ($C_1$—$C_6$)-Alkyl oder ($C_1$—$C_4$)-Alkoxycarbonyl-($C_1$—$C_3$)-alkyl;

$R^3$ H, ($C_1$—$C_6$)-Alkyl, ($C_1$—$C_4$)-Alkoxy, Hydroxy($C_1$—$C_4$)-alkyl, ($C_5$—$C_6$)-Cycloalkyl, ($C_3$—$C_6$)-Alkenyl oder die Gruppe

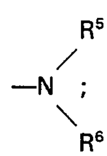

$R^4$ H, $(C_1—C_6)$-Alkyl, Hydroxy$(C_1—C_4)$-alkyl, Cyclopropyl, $(C_3—C_6)$-Alkenyl; Phenyl, das ein- bis dreifach durch $(C_1—C_4)$-Alkyl, $(C_1—C_4)$-Alkoxy, Halogen oder $CF_3$ substituiert sein kann; oder

$R^3$ und $R^4$ gemeinsam eine Alkylenkette mit 2, 4 oder 5 C-Atomen, in der eine $CH_2$-Gruppe gegebenenfalls durch O, NH oder $N(C_1—C_4)$-Alkyl ersetzt sein kann;

$R^5$ und $R^6$ unabhängig voneinander H oder $(C_1—C_4)$-Alkyl;

X und Y unabhängig voneinander O oder S;

$R^7$ und $R^8$ unabhängig voneinander $(C_1—C_6)$-Alkyl, das durch Halogen, $(C_1—C_4)$-Alkoxy oder Phenyl substituiert sein kann;

$R^9$ und $R^{10}$ unabhängig voneinander H oder $(C_1—C_6)$-Alkyl, das durch Halogen, OH oder $(C_1—C_6)$-Alkoxy substituiert sein kann;

$R^{11}$ H oder $(C_1—C_6)$-Alkyl;

$R^{12}$ $(C_1—C_6)$-Alkyl und

W OH, O-Benzyl (ggf. substituiert durch Cl oder $CH_3$) oder

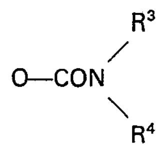

Unter "Kationäquivalenten" sind im Vorstehenden insbesondere Alkali- oder Erdalkali-ionen sowie gegebenenfalls durch niederes Alkyl oder Hydroxyalkyl ein- bis dreifach substituiertes Ammonium zu verstehen.

Heterocyclische Reste, die als Substituenten einer Alkylgruppe in $R^1$-Stellung in Frage kommen, können z.B. sein: Oxiranyl, Pyrrolidyl, Piperidyl, Pyrazolyl, Morpholyl, Furyl, Tetrahydrofuryl, Indolyl, Azepinyl oder Triazolyl.

$R_3$ und $R_4$ können zusammen mit dem Aminstickstoff vorzugsweise einem Pyrrolidin-, Piperidin-, Morpholin- (ggf. ein- oder zweifach durch $CH_3$ substituiert) oder N-Methylpiperazinring bilden.

Die Verbindungen der allgemeinen Formel I sind großenteils bekannt oder lassen sich nach allgemein bekannten Verfahren herstellen. Einige der Verbindungen werden als Herbizide verwendet bzw. wurden als Herbizide vorgeschlagen (R. Wegler, "Chemie der Pflanzenschutz- und Schädlingsbekämpfungsmittel" II, 274 ff. nebst weiteren Literaturhinweisen; US—4 062 670, US—4 019 892).

In den nachfolgenden Tabellen sind beispielhaft eine Reihe von Verbindungen der allgemeinen Formel I aufgeführt.

TABELLE I

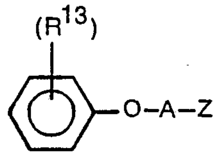

| Beispiel | $R^{13}$ | A | Z |
|---|---|---|---|
| 1 | 4-Cl | $CH_2$ | COOH |
| 2 | " | " | $COOCH_3$ |
| 3 | 2,4-Di-Cl | " | COOH |
| 4 | " | " | $COOCH_3$ |
| 5 | " | " | $COOC_2H_5$ |
| 6 | " | " | $COOC_3H_7(i)$ |
| 7 | " | " | $COOC_4H_9(i)$ |
| 8 | " | " | $COOCH_2CH_2—OCH_3$ |
| 9 | " | " | $COOC_8H_{17}(i)$ |
| 10 | " | " | $COSC_2H_5$ |
| 11 | " | " | $COSC_4H_9$ |
| 12 | " | " | COONa |
| 13 | " | " | COOK |
| 14 | " | " | $COOCH_2—CH_2—OC_4H_9(n)$ |
| 15 | " | " | $COONH_3C_8H_{17}(i)$ |
| 16 | " | " | $COONHCH_3(C_8H_{17})_2$ |
| 17 | " | " | $COONH_2(C_8H_{17}(i))_2$ |
| 18 | " | " | $COONH(C_8H_{17}(i))_3$ |
| 19 | " | " | $COONH_2(CH_3)_2$ |
| 20 | " | " | $COOCH_2CH_2-$ 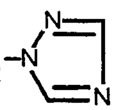 |
| 21 | " | " | $COOCH_2CH_2-$ 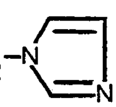 |
| 22 | " | " | $COOCH_2—COOCH_3$ |

Fortsetzung Tabelle I

| Beispiel | $R^{13}$ | A | Z |
|---|---|---|---|
| 23 | 2,4-Di-Cl | $CH_2$ | 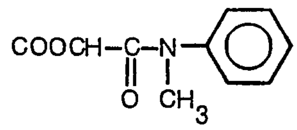 |
| 24 | " | " | $\underset{\overset{\mid}{CH_3}}{COOCH}-COOCH_3$ |
| 25 | " | " | $-\overset{\overset{O}{\parallel}}{C}-NH_2$ |
| 26 | " | " | $-\overset{\overset{O}{\parallel}}{C}-NHCH_3$ |
| 27 | " | " | $-\underset{\underset{O}{\parallel}}{C}-N(CH_2-CH=CH_2)_2$ |
| 28 | 2,4-Di-Cl, 6—$CH_3$ | " | COOH |
| 29 | " | " | $-COOCH_3$ |
| 30 | " | " | $-COOC_8H_{17}(i)$ |
| 31 | 3,4-Di-Cl | " | COOH |
| 32 | " | " | $COOCH_3$ |
| 33 | " | " | $COOC_2H_5$ |
| 34 | " | " | $COOC_3H_7$ |
| 35 | " | " | $COOC_4H_9(n)$ |
| 36 | " | " | $COOC_8H_{17}$ |
| 37 | " | " | $COOCH_2-CH_2-O-CH_2-CH_2-O-CH_3$ |
| 38 | " | " | $COOCH_2-CH_2CH_2-Cl$ |
| 39 | " | " | $COOCH_2-CH_2-N(CH_3)_2$ |
| 40 | " | " | $COOCH_2-CH_2SO_2CH_3$ |
| 41 | " | " | $COOCH_2-CH=CH_2$ |
| 42 | " | " | $COOCH_2-C\equiv CH$ |
| 43 | " | " | $COOCH_2-CH_2-O-C_4H_9$ |
| 44 | " | " | $COOCH_2-COOCH_3$ |
| 45 | " | " | $COOCH_2-COOC_4H_9$ |
| 46 | " | " | $\underset{\overset{\mid}{CH_3}}{COOCH}-COOC_2H_4-OCH_3$ |

Fortsetzung Tabelle I

| Beispiel | $R^{13}$ | A | Z |
|---|---|---|---|
| 47 | 3,4-Di-Cl | $CH_2$ | $COO-CH_2-$ 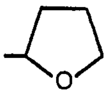 |
| 48 | " | " | $-COO-$ 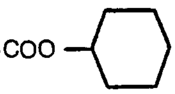 |
| 49 | " | " | $COOCH_2-$ 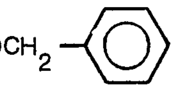 |
| 50 | " | " | $COO-$ 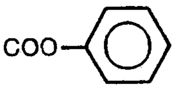 |
| 51 | " | " | $COO-CH_2-\overset{O}{\overset{\|}{C}}-N(CH_3)_2$ |
| 52 | " | " | $COOCH_2-CH_2-\underset{OCH_3}{\underset{\|}{CH}}CH_3$ |
| 53 | " | " | $COSC_2H_5$ |
| 54 | " | " | $COSC_4H_9$ |
| 55 | " | " | $COSCH_2-COOCH_3$ |
| 56 | " | " | $COSCH_2-$ 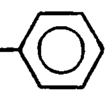 |
| 57 | " | " | COONa |
| 58 | " | " | COOK |
| 59 | " | " | $COONH_3C_3H_7(i)$ |
| 60 | " | " | $CONH_2$ |
| 61 | " | " | $CONHCH_3$ |
| 62 | " | " | $CONHC_3H_7(i)$ |
| 63 | " | " | CON 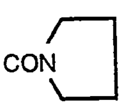 |
| 64 | " | " | $-\overset{O}{\overset{\|}{C}}-N(CH_3)_2$ |

Fortsetzung Tabelle I

| Beispiel | $R^{13}$ | A | Z |
|---|---|---|---|
| 65 | 3,4-Di-Cl | $CH_2$ | 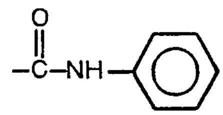 |
| 66 | " | " | 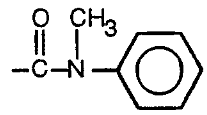 |
| 67 | 2,3-Di-Cl | " | COOH |
| 68 | " | " | $COOCH_3$ |
| 69 | " | " | $COOC_8H_7$ |
| 70 | 3,5-Di-Cl | " | COOH |
| 71 | " | " | $COOCH_3$ |
| 72 | " | " | $COOC_2H_5$ |
| 73 | " | " | $COOC_4H_9$(n) |
| 74 | " | " | $COOC_8H_{17}$ |
| 75 | " | " | $COOCH_2—CH=CH_2$ |
| 76 | " | " | $COOCH_2—CH_2N(CH_3)_2$ |
| 77 | " | " | $COOCH_2—C≡CH$ |
| 78 | " | " | $COSCH_2CH_3$ |
| 79 | " | " | 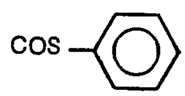 |
| 80 | " | " | 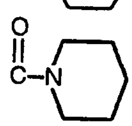 |
| 81 | " | " | 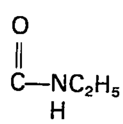 |
| 82 | " | " | 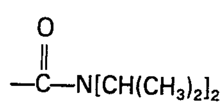 |
| 83 | " | " | 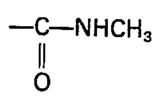 |
| 84 | " | " | 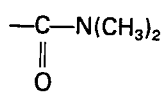 |

Fortsetzung Tabelle I

| Beispiel | $R^{13}$ | A | Z |
|---|---|---|---|
| 85 | 3,5-Di-Cl | $CH_2$ | $C(=O)-NH_2$ |
| 86 | „ | „ | $-C(=O)-NHC_4H_9$ |
| 87 | „ | „ | $-COONa$ |
| 88 | „ | „ | $-COOK$ |
| 89 | „ | „ | $-COONH_3C_3H_7(i)$ |
| 90 | „ | „ | $-COONH(C_2H_4OH)_3$ |
| 91 | „ | „ | $-COONH_2(C_8H_{17}(i))_2$ |
| 92 | 2,6-Di-Cl | „ | COOH |
| 93 | „ | „ | $COOCH_3$ |
| 94 | „ | „ | $COOC_8H_{17}$ |
| 95 | „ | „ | $COOCH_2-CH_2-OCH_3$ |
| 96 | „ | „ | COONa |
| 97 | 2-Cl, 4-F | „ | COOH |
| 98 | „ | „ | $COOCH_3$ |
| 99 | „ | „ | $COOC_4H_9$ |
| 100 | 2-Cl, 4-Br | „ | COOH |
| 101 | „ | „ | $COOC_3H_7$ |
| 102 | 2-Cl, 4-$CF_3$ | „ | COOH |
| 103 | „ | „ | $COOC_2H_5$ |
| 104 | „ | „ | $COOC_4H_9$ |
| 105 | „ | „ | $COOC_8H_{17}$ |
| 106 | „ | „ | $COSC_2H_5$ |
| 107 | 2-$CH_3$, 4-Cl | „ | COOH |
| 108 | „ | „ | $COOCH_3$ |
| 109 | „ | „ | $COOC_4H_9$ |
| 110 | 2,4-Di-Cl, 6-$CH_3$ | „ | COOH |
| 111 | „ | „ | $COOCH_3$ |
| 112 | „ | „ | $COOC_2H_5$ |

Fortsetzung Tabelle I

| Beispiel | $R^{13}$ | A | Z |
|---|---|---|---|
| 113 | 2,3-Di-Cl, 4-$NO_2$ | $CH_2$ | COOH |
| 114 | 2,4-Di-$CH_3$ | " | COOH |
| 115 | 2,4-Di-Cl | $-CH(CH_3)-$ | COOH |
| 116 | " | " | $COOCH_3$ |
| 117 | " | " | $COOC_8H_{17}$ |
| 118 | " | " | $COOCH_2-CH_2-OC_4H_9$ |
| 119 | " | " | $COSCH_2CH_3$ |
| 120 | 3,4-Di-Cl | " | COOH |
| 121 | " | " | $COOCH_3$ |
| 122 | " | " | $COOC_4H_9$(n) |
| 123 | " | " | $COOCH_2-CH_2-CH_3$ with $OCH_3$ on the $CH_2$ |
| 124 | " | " | $COOCH_2-CH{=}CH_2$ |
| 125 | 2,3-Di-Cl | $CH(CH_3)$ | COOH |
| 126 | " | " | $COOC_6H_{13}$ |
| 127 | 2,6-Di-Cl | " | COOH |
| 128 | " | " | $COOC_2H_5$ |
| 129 | 3,5-Di-Cl | " | COOH |
| 130 | " | " | $COOC_3H_7$ |
| 131 | " | " | $COOC_8H_{17}$ |
| 132 | " | " | $COS-CH_2-COOC_4H_9$ |
| 133 | " | " | $C(=O)-NH_2$ |
| 134 | " | " | $C(=O)-NHC_3H_7$(i) |
| 135 | 3,4-Di-Cl | $CH_2$ | $CH_2OH$ |
| 136 | " | " | $CH_2-O-C(=O)-CH_3$ |

Fortsetzung Tabelle I

| Beispiel | $R^{13}$ | A | Z |
|---|---|---|---|
| 137 | 2,4-Di-Cl | $CH_2$ | $CH_2OH$ |
| 138 | " | " | $CH_2—O—C—CH_2—CH_3$<br>‖<br>O |
| 139 | 3,5-Di-Cl | " | $CH_2OH$ |
| 140 | 3,4-Di-Cl | CH<br>\|<br>$CH_3$ | " |
| 141 | 2,4-Di-Cl | " | " |
| 142 | 2-Cl, 4-F | " | " |
| 143 | 2-$CH_3$, 4-Cl | " | " |
| 144 | 2-Cl, 4-$CF_3$ | " | " |
| 145 | 2-Cl, 4-$CF_3$ | $CH_2$ | " |
| 146 | 3,4-Di-Cl | $CH_2$ | $CH_2$—O—Benzyl |
| 147 | " | CH<br>\|<br>$CH_3$ | 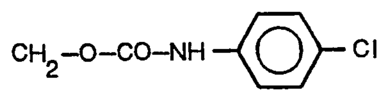 |
| 148 | 2,4-Di-Cl | $CH_2$ | $CH(OC_2H_5)_2$ |
| 149 | " | " | $CH(OCH_3)_2$ |
| 150 | " | " | 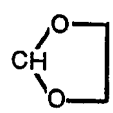 |
| 151 | 3,4-Di-Cl | " | " |
| 152 | " | " | $CH(OC_2H_5)_2$ |
| 153 | 3,5-Di-Cl | " | " |
| 154 | 3,4-Di-Cl | " | 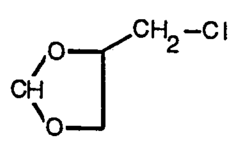 |
| 155 | 4-Cl | " | 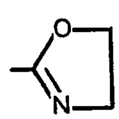 |
| 156 | 3,4-Di-Cl | " | " |

Fortsetzung Tabelle I

| Beispiel | $R^{13}$ | A | |
|---|---|---|---|
| 157 | 4-Cl | $CH_2$ | 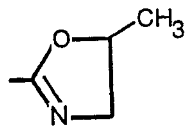 |
| 158 | 3,4-Di-Cl | " | " |
| 159 | 2-Cl-4-Br | " | " |
| 160 | 4-Cl | " | 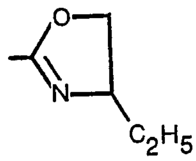 |
| 161 | 3,4-Di-Cl | " | 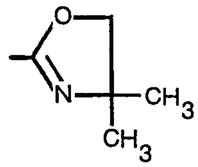 |
| 162 | 4-Cl | " | " |
| 163 | " | " | 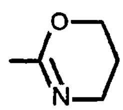 |
| 164 | 2,5-Di-Cl | " | COOH |
| 165 | 3-Cl | " | " |
| 166 | 2,4-Di-Cl | " | $COOCH_2C{\equiv}CH$ |
| 167 | " | " | $CONH_2$ |
| 168 | " | " | CONHOH |
| 169 | " | $CH(CH_3)$ | $COOH_2CH_2$– 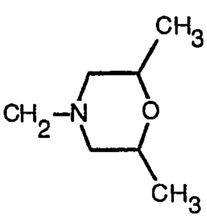 |
| 170 | " | " | $COOCH_2CH_2$—SCN |
| 171 | " | " | $CONH_2$ |
| 172 | 3,4-Di-Cl | $CH_2$ | COO– 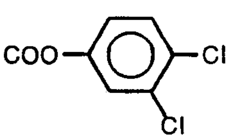 |
| 173 | " | $CH(CH_3)$ | $COOCH_2C{\equiv}CH$ |
| 174 | H | " | CONCS |

Fortsetzung Tabelle I

| Beispiel | $R^{13}$ | A | Z |
|---|---|---|---|
| 175 | 2,6-Di-Cl | $CH_2$ | CONCS |
| 175a | 3,5-Di-Cl | " | $CONH_2$ |
| | | 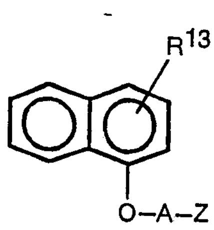 | |
| 176 | 4-Cl | $CH_2$ | COOH |
| 177 | " | " | $COOCH_3$ |
| 178 | " | " | $COOC_4H_9(n)$ |
| 179 | 2,4-Di-Cl | " | COOH |
| 180 | " | " | $COOC_2H_5$ |
| 181 | " | " | $COOC_8H_{17}$ |
| 182 | " | " | $CONH_2$ |
| 183 | " | " | $CONHC_4H_9(n)$ |
| 184 | H | " | $COOCH_3$ |
| 185 | H | " | $COSC_2H_5$ |
| 186 | H | " | COOH |
| 187 | Cl | " | COONa |
| | | 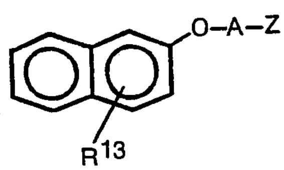 | |
| 188 | H | " | COOH |
| 189 | H | " | $COOC_4H_9(n)$ |
| 190 | H | " | $COOCH_3$ |
| 191 | H | " | $COSC_2H_5$ |

Die Verbindungen der allgemeinen Formel I zeichnen sich dadurch aus, daß sie in subtoxischen Konzentrationen in Verbindung mit Fenoxaprop-ethyl ausgebracht werden und dann in der Lage sind, schädliche Nebenwirkungen des letzteren zu antagonisieren, d.h. völlig aufzuheben, ohne dessen herbizide Wirksamkeit zu beeinträchtigen.

Hierdurch kann das Einsatzgebiet von Fenoxaprop-ethyl ganz erheblich vergrößert werden. Gegenstand der vorliegenden Erfindung ist daher auch ein Verfahren zum Schutz von Kulturpflanzen

gegen phytotoxische Nebenwirkungen von Fenoxaprop-ethyl, das dadurch gekennzeichnet ist, daß man die Pflanzen, Pflanzenteile oder Pflanzennährböden mit einer Verbindung der Formel I vor, nach oder gleichzeitig mit Fenoxaprop-ethyl behandelt.

Das Mengenverhältnis Antidot:Herbizid kann innerhalb weiter Grenzen zwischen 0.1 und 5 Teilen Antidot auf 1 Teil Herbizid schwanken. Die jeweils optimalen Mengen an Herbizid und Antidot sind abhängig vom Typ des verwendeten Antidots sowie von der Art des zu behandelnden Pflanzenbestandes und lassen sich von Fall zu Fall durch entsprechende Versuche ermitteln.

Haupteinsatzbiete für die Anwendung der Safener sind vor allem Getriedekulturen (Weizen, Roggen, Gerste, Hafer), Reis, Mais, Sorghum, aber auch Baumwolle, Zuckerrüben, Zuckerrohr und Sojabohne.

Die Safener können je nach ihren Eigenschaften zur Vorbehandlung des Saatgutes der Kulturpflanze (Beizung der Samen) verwendet werden oder vor der Saat in die Saatfurchen eingebracht werden oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein.

Grundsätzlich kann das Antidot vor, nach oder gleichzeitig mit Fenoxaprop-ethyl angewendet werden, bevorzugt ist jedoch die gleichzeitige Anwendung in Form von Tankmischungen oder gegebenenfalls Fertigformulierungen.

Für die Anwendung können die Verbindungen der Formel I mit üblichen Formulierungshilfsmitteln zu Stäubemitteln, Spritzpulvern, Dispersionen, Emulsionskonzentraten, Granulaten oder Mikrogranulaten zubereitet werden, die den Wirkstoff in Konzentrationen von 2—80% enthalten und entweder als solche angewendet werden (Stäubemittel, Pellets) oder vor der Anwendung in einem Lösungsmittel (Wasser) gelöst oder dispergiert werden.

Spritzpulver sind in Wasser gleichmäßig dispergierbare Präparate, die neben dem Wirkstoff außer gegebenenfalls einem Verdünnungs- oder Inertstoff noch Netzmittel, z.B. polyoxethylierte Alkylphenole, polyoxyethylierte Fettalkohole, Alkyl- oder Alkylphenylsulfonate und Dispergiermittel, z.B. ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Die Herstellung erfolgt in üblicher Weise, z.B. durch Mahlen und Vermischen der Komponenten.

Emulgierbare Konzentrate können, z.B. durch Auflösen des Wirkstoffes in einem inerten organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt werden. Bei flüssigen Wirkstoffen kann der Lösungsmittelanteil auch ganz oder teilweise entfallen. Als Emulgatoren können beispielsweise verwendet werden: Alkyl-arylsulfonsature Calciumsalze wie Cadodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyglykolether, Sorbitanfettsäureester, Polyoxethylensorbitanfettsäureester oder Polyoxethylensorbitester.

Stäubemittel kann man durch Vermahlen des Wirkstoffes mit fein verteilten, festen Stoffen, z.B. Talkum, natürlichen Tonen wie Kaolin, Bentonit, Pyrophillit oder Diatomeenerde erhalten.

Granulate können entweder durch Verdüsen des Wirkstoffes auf adsorptionsfähiges, granuliertes Inertmaterial hergestellt werden oder durch Aufbringen von Wirkstoffkonzentrationen mittels Bindemitteln, z.B. Polyvinylalkohol, polyacrylsaurem Natrium oder auch Mineralölen auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise, gewünschtenfalls in Mischung mit Düngemitteln, granuliert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentration kann die Wirkstoffkonzentration etwa 10 bis 80 Gew.-% betragen. Staubförmige Formulierungen enthalten meistens 5 bis 20 Gew.-% an Wirkstoff, versprühbare Lösungen etwa 2 bis 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Konzentrate gegebenenfalls in üblicher Weise verdünnt, z.B. bei Spritzpulvern, emulgierbaren Konzentraten, Dispersionen und teilweise auch bei Mikrogranulaten mittels Wasser. Staubförmige und granulierte Zubereitungen sowie versprühbare Lösungen werden vor der Anwendung üblicherweise nicht mehr mit weiteren inerten Stoffen verdünnt.

A. Formulierungsbeispiele

a. Ein Stäubemittel wird erhalten, indem man 10 Gew.-Teile Safener und 90 Gewichtsteile Talkum oder Inertstoff mischt und in einer Schlagmühle zerkleinert.

b. Ein in Wasser leicht dispergierbares, benetzbares Pulver wird erhalten, indem man 25 Gewichtsteile Safener, 64 Gewichtsteile kaolinhaltigen Quarz als Inertstoff, 10 Gewichtsteile ligninsulfonsaures Kalium und 1 Gewichtsteil oleoylmethyltaurinsaures Natrium als Netz- und Dispergiermittel mischt und in einer

Stiftmühle mahlt.

c. Ein in Wasser leicht dispergierbares Dispersionskonzentrat wird erhalten, indem man 20 Gewichtsteile Safener mit 6 Gewichtsteilen Alkylphenolpolyglykolether (Triton® × 207), 3 Gewichtsteilen Isotridecanolpolyglykolether (8 AeO) und 71 Gewichtsteilen paraffinischem Mineralöl (Siedebereich z.B. ca. 255 bis über 377°C) mischt und in einer Reibkugelmühle auf eine Feinheit von unter 5 Mikron vermahlt.

d. Ein emulgierbares Konzentrat wird erhalten aus 15 Gewichtsteilen Safener, 75 Gewichtsteilen Cyclohexanon als Lösungsmittel und 10 Gewichtsteilen oxethyliertes Nonylphenol als Emulgator.

Biologische Beispiele

Beispiel 1

Weisen und Flughafer (Avena fatua) wurden ausgesät und unter Gewächshausbedingungen bis zum 4-Blattstadium angezogen. Sodann wurde eine Anzahl von Antidots gemäß Tabelle I und das Herbizid A in verschiedenen Dosierungen auf die Versuchspflanzen gesprüht. Nach 4 weiteren Wochen Standzeit im Gewächshaus wurden die Pflanzen auf jede Art von Hemmung oder Schädigung im Vergleich zu nicht mit Antidot behandelten Versuchspflanzen untersucht. Die Ergebnisse zeigen, daß die Antidots die herbiziden Schadwirkungen an Weizen stark reduzieren, ohne die herbizide Wirksamkeit gegen die Schadgräser Avena und Alopecurus zu beeinträchtigen:

TABELLE II

Antidotwirkung in Weichweizen

| Verbindung (Beispiel) | Dosis kg a.i./ha | herbizide Wirkung in % TA | AVF |
|---|---|---|---|
| A | 2 | 85 | — |
| | 0,3 | — | 90 |
| A + 151 | 2 + 1 | 35 | — |
| | 0,3 + 1 | — | 95 |
| A + 152 | 2 + 1 | 60 | — |
| | 0,3 + 1 | — | 90 |
| A + 160 | 2 + 1 | 25 | — |
| | 0,3 + 1 | — | 95 |
| A + 162 | 2 + 1 | 10 | — |
| | 0,3 + 1 | — | 85 |
| A + 184 | 2 + 1 | 32 | — |
| A + 188 | 2 + 1 | 28 | — |
| | — | — | — |
| A + 190 | 2 + 1 | 38 | — |
| | — | — | — |
| A + 92 | 2 + 1 | 25 | — |
| A + 67 | 2 + 1 | 20 | — |
| | — | — | — |
| A + 164 | 2 + 1 | 40 | — |
| | — | — | — |

Fortzetzung Tabelle II

| Verbindung (Beispiel) | Dosis kg a.i./ha | herbizide Wirkung in % TA | AVF |
|---|---|---|---|
| A + 31 | 2 + 1 | 28 | — |
| | 0,3 + 1 | — | 90 |
| A + 165 | 2 + 1 | 25 | — |
| | 0,3 + 1 | — | 90 |
| A + 70 | 2 + 1 | 23 | — |
| | 0,3 + 1 | — | 88 |
| A + 120 | 2 + 1 | 55 | — |
| | — | — | — |
| A + 170 | 2 + 1 | 50 | — |
| | — | — | — |
| A + 73 | 2 + 1 | 20 | — |
| | 0,3 + 1 | — | 90 |
| A + 32 | 2 + 1 | 13 | — |
| | 0,3 + 1 | — | 92 |
| A + 173 | 2 + 1 | 18 | — |
| | — | — | — |
| A + 172 | 2 + 1 | 20 | — |
| | — | — | — |
| A + 78 | 2 + 1 | 22 | — |
| | 0,3 + 1 | — | — |
| A + 174 | 2 + 1 | 22 | — |
| | — | — | — |
| A + 175 | 2 + 1 | 25 | — |
| | — | — | — |
| A + 175a | 2 + 1 | 30 | — |
| | — | — | — |
| A + 84 | 2 + 1 | 50 | — |
| | — | — | — |

Abkürzungen:
A = Fenoxaprop-ethyl, TA = Triticum aestivum, AVF = Avena fatua.

Beispiel 2

Die Pflanzen wurden im Gewächshaus angezogen und im 4—6 Blattstadium mit den erfindungsgemäßen Kombinationen behandelt. Nach 4 Wochen wurden die visuellen Bonituren vorgenommen.

Die Ergebnisse sind in Tabelle III zusammengefaßt. Sie zeigen, daß der Wirkstoff A in Dosierungen, die gegen die Schadgräser Avena fatua und Alopecurus myosuroides gut wirksam sind, bei der Kulturpflanze Weisen (Triticum aestivum) deutliche Schäden verursacht.

Kombinationen der Wirkstoffe A und 107 (4-Chlor-2-methylphenoxyessigsäure) ziegen überasschenderweise eine bessere Toleranz (Selektivität) gegenüber Weizen im Vergleich zu A allein. Dadurch wird es erst möglich, den Wirkstoff A zur Bekämpfung von Schadgräsern wie z.B. Avena fatua und Alopecurus myosuroides in Weizen anzuwenden.

Außerdem bringt die Kombination einen besseren Wirkungsgrad gegen Schadpflanzen insbesondere gegen Sinapis arvensis im Vergleich zu den Einzelwirkstoffen.

Der Nachweis des Synergismus ergibt sich aus dem Vergleich des aus den Wirkungen der Einzelkomponenten errechneten additiven Wirkungsgrades mit dem Experimentell gefundenen Wirkungsgrad der Wirkstoffkombinationen. Die Errechnung des additiven Wirkungsgrades erfolgt nach der Formel von S. R. Colby (vgl. Calculating synergistic and antagonistic responses of herbicide combinations, Weeds, *15*, 1967, S. 20—22).

Diese Formel lautet: $E = X + Y - \frac{X \cdot Y}{100}$

wobei

X = % Schädigung durch Wirkstoff A bei xkg/ha Aufwandmenge;

Y = % Schädigung durch Wirkstoff 107 bei ykg/ha Aufwandmenge;

E = % die erwartete Schädigung durch A + 107 bei x + y kg/ha Aufwandmenge

bedeuten.

Ist die tatsächliche Schädigung größer als bereichnet, so ist die Wirkung der Wirkstoffkombination mehr als additiv, d.h. es liegt ein synergistischer Effekt vor. Dies wird anhand der biologischen Beispiele der nachfolgenden Tabellen demonstriert, wobei in der rechten Spalte bei den Ergebnissen der Kombinationsbehandlungen in Klammern die aus obiger Formel errechneten additiven Wirkungen angegeben sind.

TABELLE III

Herbizide Wirksamkeit (Schädigung) und Selektivität bei Anwendung im Nachauflau (Wirkung in %)

| Wirkstoff | Dosis g AS/ha | Triticum aestivum | Avena fatua | Alopecurus myosuroides | Sinapis arvensis |
|---|---|---|---|---|---|
| A | 50 | 0 | 63 | 60 | 0 |
| | 100 | 15 | 90 | 80 | 10 |
| | 150 | 25 | 100 | 92 | 15 |
| | 200 | 33 | 100 | 100 | 25 |
| | 300 | 60 | — | — | — |
| 107 | 25 | 0 | 0 | 0 | 30 |
| | 50 | 0 | 0 | 0 | 45 |
| | 100 | 0 | 0 | 0 | 58 |
| | 150 | 0 | 0 | 0 | 65 |
| | 200 | 0 | 0 | 0 | 76 |
| | 300 | 0 | 0 | 0 | 84 |
| | 400 | 0 | 0 | 0 | — |
| | 600 | 0 | 0 | 0 | — |

FORTSETZUNG TABELLE III

Herbizide Wirksamkeit (Schädigung) und Selektivität bei Anwendung im Nachauflau (Wirkung in %)

| Wirkstoff | Dosis g AS/ha | Triticum aestivum | Avena fatua | Alopecurus myosuroides | Sinapis arvensis |
|---|---|---|---|---|---|
| A + 107 | 50 + 25 | 0 | 78 (63) | 70 (60) | 69 (30) |
| | 100 + 50 | 0 | 95 (90) | 85 (80) | 82 (51) |
| (1 : 0,5) | 150 + 75 | 0 | 100 | 98 (92) | 85 — |
| | 200 + 100 | 0 | 100 | 100 | 95 (69) |
| | 300 + 150 | 15 | — | — | — |
| A + 107 | 50 + 50 | 0 | 76 (63) | 75 (60) | 72 (45) |
| | 100 + 100 | 0 | 92 (90) | 85 (80) | 86 (63) |
| (1 : 1) | 150 + 150 | 0 | 100 | 98 (92) | 99 (71) |
| | 200 + 200 | 0 | 100 | 100 | 98 (82) |
| | 300 + 300 | 10 | — | — | — |
| A + 107 | 50 + 100 | 0 | 80 (63) | 75 (60) | 86 (58) |
| | 100 + 200 | 0 | 95 (90) | 86 (80) | 89 (79) |
| (1 : 2) | 150 + 300 | 0 | 100 | 98 (92) | 93 (87) |
| | 200 + 400 | 0 | 100 | 100 | 99 |
| | 300 + 600 | 0 | — | — | — |

**Patentansprüche**

1. Verwendung von Verbindungen der Formel I

$$AR—O—A—Z \quad (I),$$

als Safener für Fenoxaprop-ethyl Ethyl (±)-2-[4-(6-chloro-2-benzoxazol-2-yloxy)phenoxy]propionat wobei die einzelnen Reste folgende Bedeutungen haben:

Ar ein Phenyl- oder Naphthylrest, der jeweils ein- bis zweifach durch gleiche oder verschiedene Halogenatome und/oder ein- oder zweifach durch ($C_1$—$C_4$)-Alkyl ($C_1$—$C_4$)-Alkoxy substituiert sein kann;

A $—CH_2—$ oder $—CH(CH_3)—$

Z ein Rest der Formel

$-COOR^1$, $-COO-A-COOR^1$, $-COSR^2$, 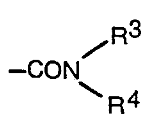 , $-CONCS$, $-CONHOH$,

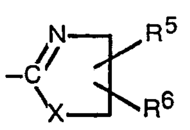 , 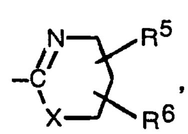 , 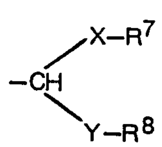 , 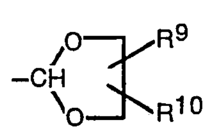 oder $CH_2-W$;

$R^1$ H; geradkettiges oder verzweigtes ($C_1$—$C_{12}$)-Alkyl, das gegebenenfalls ein- bis dreifach durch Fluor, Chlor oder Brom und/oder ein- oder zweifach durch CN, SCN, OH, ($C_1$—$C_6$)-Alkoxy, ($C_1$—$C_4$)-Alkylthio,

($C_1$—$C_4$)-Alkylsulfinyl, ($C_1$—$C_4$)-Alkylsulfonyl, ($C_1$—$C_6$)-Alkoxy-($C_2$—$C_6$)-alkoxy, Halogenalkoxy, Methoxyethoxyethoxy, ($C_1$—$C_4$)-Alkylamino, Di($C_1$—$C_4$)-Alkylamino oder ($C_1$—$C_4$)-Alkylcarbonyl, einen drei- bis siebengliedrigen, gegebenenfalls benzokondensierten und/oder durch Halogen bzw. ($C_1$—$C_4$)-Alkyl substituierten gesättigten oder ungesättigten heterocyclischen Rest mit bis zu drei gleichen oder verschiedenen Heteroatomen (S, O oder N) oder einen gegebenenfalls ein- oder zweifach durch Fluor, Chlor, Brom und/oder ($C_1$—$C_4$)-Alkyl substituierten Phenyl-, Phenoxy- oder Benzyloxyrest substituiert ist; ($C_5$—$C_6$)-Cycloalkyl, ($C_3$—$C_6$)-Alkenyl oder ($C_3$—$C_6$)-Alkinyl; Phenyl, das gegebenenfalls ein- bis zweifach durch ($C_1$—$C_4$)-Alkyl, ($C_1$—$C_4$)-Alkoxy, Halogen oder $CF_3$ substituiert ist; die Gruppe

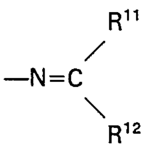

oder ein Kationäquivalent einer organischen oder anorganischen Base;

$R^2$ ($C_1$—$C_6$)-Alkyl oder ($C_1$—$C_4$)-Alkoxycarbonyl-($C_1$—$C_3$)-alkyl;

$R^3$ H, ($C_1$—$C_6$)-Alkyl, ($C_1$—$C_4$)-Alkoxy, Hydroxy($C_1$—$C_4$)-alkyl, ($C_5$—$C_6$)-Cycloalkyl, ($C_3$—$C_6$)-Alkenyl oder die Gruppe

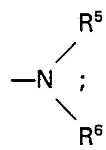 ;

$R^4$ H, ($C_1$—$C_6$)-Alkyl, Hydroxy($C_1$—$C_4$)-alkyl, Cyclopropyl, ($C_3$—$C_6$)-Alkenyl; Phenyl, das ein- bis dreifach durch ($C_1$—$C_4$)-Alkyl, ($C_1$—$C_4$)-Alkoxy, Halogen oder $CF_3$ substituiert sein kann; oder

$R^3$ und $R^4$ gemeinsam eine Alkylenkette mit 2, 4 oder 5 C-Atomen, in der eine $CH_2$-Gruppe gegebenenfalls durch O, NH oder N($C_1$—$C_4$)-Alkyl ersetzt sein kann;

$R^5$ und $R^6$ unabhängig voneinander H oder ($C_1$—$C_4$)-Alkyl;

X und Y unabhängig voneinander O oder S;

$R^7$ und $R^8$ unabhängig voneinander ($C_1$—$C_6$)-Alkyl, das durch Halogen, ($C_1$—$C_4$)-Alkoxy oder Phenyl substituiert sein kann;

$R^9$ und $R^{10}$ unabhängig voneinander H oder ($C_1$—$C_6$)-Alkyl, das durch Halogen, OH oder ($C_1$—$C_6$)-Alkoxy substituiert sein kann;

$R^{11}$ H oder ($C_1$—$C_6$)-Alkyl;

$R^{12}$ ($C_1$—$C_6$)-Alkyl und

W OH, O-Benzyl (ggf. substituiert durch Cl oder $CH_3$) oder

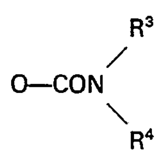

2. Verfahren zum Schutz von Kulturpflanzen gegen phytotoxische Nebenwirkungen von Fenoxaprop-ethyl, dadurch gekennzeichnet, daß man die Verbindungen gemäß Anspruch 1 vor, nach oder gleichzeitig mit Fenoxapropethyl auf die zu behandelnden Pflanzen, Pflanzenteile oder Pflanzennährböden aufbringt.

3. Verfahren gemäß Anspruch 2, dadurch gekennzeichnet, daß das Verhältnis von Safener zu Fenoxaprop-ethyl zwischen 0.1:1 und 5:1 liegt.

4. Verfahren gemäß Anspruch 2, dadurch gekennzeichnet, daß die Kulturpflanzen eine Getreideart, Reis, Mais, Sorghum, Baumwolle, Zuckerrüben, Zuckerrohr oder Soja ist.

5. Verfahren gemäß Anspruch 2, dadurch gekennzeichnet, daß die Kulturpflanzen Weizen, Gerste oder Mais ist.

6. Pflanzenbehandlungsmittel, gekennzeichnet durch einen Gehalt an

(a) einer Verbindung der Formel I gemäß Anspruch 1 und

(b) Fenoxaprop-ethyl.

7. Pflanzenbehandlungsmittel gemäß Anspruch 6, dadurch gekennzeichnet, daß das Mengenverhältnis von (a) zu (b) 0,1:1 bis 5:1 beträgt.

**Revendications**

1. L'emploi, comme antidotes contre le Fénoxaprop-éthyl [(±)-2-[4-(6-chloro-2-benzoxazol-2-yloxy)phénoxy]propionate d'éthyle], des composés de formule I ci-dessous:

$$Ar—O—A—Z \quad (I),$$

dans laquelle

Ar désigne un radical phényle ou naphtyle pouvant avoir un ou deux atomes d'halogènes identiques ou différents et/ou un ou deux alkyles ou alcoxy en $C_1—C_4$

A est le groupe $—CH_2—$ ou $—CH(CH_3)—$, et

Z est un radical:

$-COOR^1$, $-COO-A-COOR^1$, $-COSR^2$, 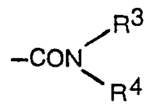 , $-CONCS$, $-CONHOH$,

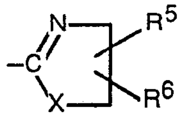 , 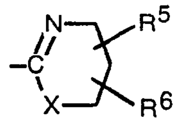 , 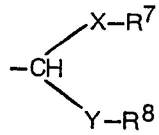 , 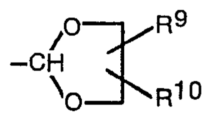 ou $CH_2-W$;

dans lesquels:

$R^1$ est l'hydrogène, un alkyle à chaîne linéaire ou ramifiée en $C_1—C_{12}$ avec éventuellement de 1 à 3 atomes de fluor, de chlore ou de brome et/ou 1 ou 2 groupes CN, SCN, OH, $(C_1—C_6)$-alcoxy, $(C_1—C_4)$-alkylthio, $(C_1—C_4)$-alkylsulfinyles, $(C_1—C_4)$-alkylsulfonyles, $(C_1—C_6)$-alcoxy-$(C_2—C_6)$-alcoxy, halogénoalcoxy, méthoxyéthoxyéthoxy, $(C_1—C_4)$-alkylamino, di$(C_1—C_4)$-alkylamino ou $(C_1—C_4)$-alkylcarbonyles, un radical hétérocyclique pouvant avoir jusqu'à 3 hétéroatomes identiques ou différents (S, O et N) et qui a de 3 à 7 chaînons, saturé ou insaturé, éventuellement à cycles benzéniques condensés et/ou portant un halogène ou un alkyle en $C_1—C_4$, ou un radical phényle, phénoxy ou benzyloxy avec éventuellement 1 ou 2 atomes de fluor, de chlore ou de brome et/ou alkyles en $C_1—C_4$; un cycloalkyle en $C_5—C_6$ ou un alcényle ou un alcynyle et $C_3—C_6$; un phényle avec éventuellement 1 ou 2 halogènes ou groupes $CF_3$ ou alkyles ou alcoxy en $C_1—C_4$; le groupe

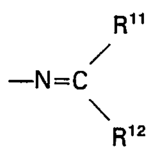

ou un équivalent de cation d'une base organique ou minérale;

$R^2$ est un alkyle en $C_1—C_6$ ou un $(C_1—C_4)$-alcoxycarbonyl-$(C_1—C_3)$-alkyle;

$R^3$ est l'hydrogène, un alkyle ou un alcoxy en $C_1—C_4$, un hydroxyalkyle en $C_1—C_4$, un cycloalkyle en $C_5—C_6$, un alcényle en $C_3—C_6$ ou le groupe

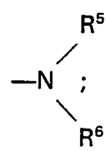 ;

$R^4$ est aussi l'hydrogène, un alkyle ou un hydroxyalkyle en $C_1—c_4$, un cyclopropyle, un alcényle en $C_3—C_6$, un phényle pouvant comporter comme substituants de 1 à 3 alkyles ou alcoxy en $C_1—C_4$, halogènes ou groupes $CF_3$; ou bien

$R^3$ et $R^4$ forment ensemble une chaîne alkylène à 2, 4 ou 5 atomes de carbone, dont un groupe $CH_2$ peut être éventuellement remplacé par un atome d'oxygène ou par un groupe NH ou N-alkyle en $C_1—C_4$;

$R^5$ et $R^6$ représentent chacun, indépendamment l'un de l'autre, l'hydrogène ou un alkyle en $C_1—C_4$;

X et Y représentent chacun, indépendamment l'un de l'autre, l'oxygène ou le soufre;

$R^7$ et $R^8$ représentent chacun, indépendamment l'un de l'autre, un alkyle en $C_1—C_6$ pouvant avoir comme substituant un halogène, un alcoxy en $C_1—C_4$ ou un phényle;

$R^9$ et $R^{10}$ représentent chacun, indépendamment l'un de l'autre, l'hydrogène ou un alkyle en $C_1—C_6$ pouvant porter un halogène, le groupe OH ou un alcoxy en $C_1—C_6$;

$R^{11}$ étant l'hydrogène ou un alkyle en $C_1—C_6$; et

$R^{12}$ un alkyle en $C_1—C_6$, et

W représente un groupe OH, O-benzyle (éventuellement substitué par Cl ou $CH_3$) ou

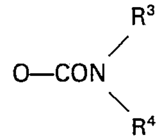

2. Procédé de protection de plantes de culture contre les effets secondaires phytotoxiques du Fénoxaprop-éthyl, procédé caractérisé en ce que l'on applique les composés de la revendication 1 avant ou après le Fénoxaprop-éthyl ou en même temps que celui-ci sur les plantes à traiter ou sur des parties de ces plantes et encore sur les terrains de culture.

3. Procédé selon la revendication 2, caractérisé en ce que le rapport de l'antidote au Fénoxaprop-éthyl est compris entre 0,1 et 5.

4. Procédé selon la revendication 2, caractérisé en ce que la plante cultivée est une céréale, du riz, maïs, sorgho, coton, betterave à suce ou canne à sucre ou soja.

5. Procédé selon la revendication 2, caractérisé en ce que la plante cultivée est du blé, de l'orge ou du maïs.

6. Produit pour le traitement de plantes, caractérisé en ce qu'il contient (a) un composé de formule I selon la revendication 1 et (b) du Fénoxaprop-éthyl.

7. Produit de traitement selon la revendication 6, caractérisé en ce que le rapport de (a) à (b) est compris entre 0,1 et 5.

**Claims**

1. The use, as safeners for fenoxaprop-ethyl (ethyl (±)-2-[4-(6-chloro-2-benzoxazol-2-yloxy)phenoxy]-propionate) of compounds of the formula I

$$Ar—O—A—Z \qquad (I)$$

in which the individual radicals have the following meanings:

Ar is a phenyl or naphthyl radical each of which can be monosubstituted or disubstituted by identical or different halogen atoms and/or monosubstituted or disubstituted by ($C_1$—$C_4$)-alkyl or ($C_1$—$C_4$)-alkoxy;

A is $—CH_2—$ or $—CH(CH_3)—$,

Z is a radical of the formula

$-COOR^1$, $-COO-A-COOR^1$, $-COSR^2$, 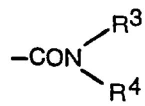 , $-CONCS$, $-CONHOH$,

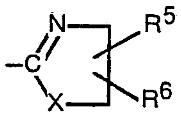 , 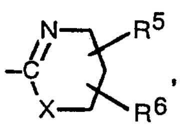 , 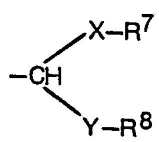 , 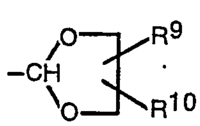 or $CH_2-W$;

$R^1$ is H; linear or branched ($C_1$—$C_{12}$)-alkyl which is optionally monosubstituted to trisubstituted by fluorine, chlorine or bromine and/or monosubstituted or disubstituted by CN, SCN, OH, ($C_1$—$C_6$)-alkoxy, ($C_1$—$C_4$)-alkylthio, ($C_1$—$C_4$)-alkylsulfinyl, ($C_1$—$C_4$)-alkylsulfonyl, ($C_1$—$C_6$)-alkoxy-($C_2$—$C_6$)-alkoxy, halogenoalkoxy, methoxyethoxyethoxy, ($C_1$—$C_4$)-alkylamino, di-($C_1$—$C_4$)-alkylamino or ($C_1$—$C_4$)-alkylcarbonyl, a three-membered to seven-membered, saturated or unsaturated heterocyclic radical which is optionally benzo-condensed and/or substituted by halogen or ($C_1$—$C_4$)-alkyl and which has up to 3 identical or different hetero-atoms (S, O or N), or a phenyl, phenoxy or benzyloxy radical which is optionally monosubstituted or disubstituted by fluorine, chlorine, bromine and/or ($C_1$—$C_4$)-alkyl; ($C_5$—$C_6$)-cycloalkyl, ($C_3$—$C_6$)-alkenyl or ($C_3$—$C_6$)-alkynyl; phenyl which is optionally monosubstituted or disubstituted by ($C_1$—$C_4$)-alkyl, ($C_1$—$C_4$)-alkoxy, halogen or $CF_3$; or the group

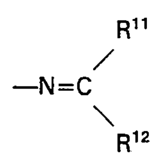

or a cation eqivalent of an organic or inorganic base;

$R^2$ is ($C_1$—$C_6$)-alkyl or ($C_1$—$C_4$)-alkoxycarbonyl-($C_1$—$C_3$)-alkyl;

$R^3$ is H, ($C_1$—$C_6$)-alkyl, ($C_1$—$C_4$)-alkoxy, hydroxy-($C_1$—$C_4$)-alkyl, ($C_5$—$C_6$)-cycloalkyl, ($C_3$—$C_6$)-alkenyl or the group

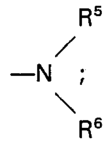 ;

$R^4$ is H, ($C_1$—$C_6$)-alkyl, hydroxy-($C_1$—$C_4$)-alkyl, cyclopropyl or ($C_3$—$C_6$)-alkenyl; or phenyl which can be monosubstituted to trisubstituted by ($C_1$—$C_4$)-alkyl, ($C_1$—$C_4$)-alkoxy, halogen or $CF_3$; or

$R^3$ and $R^4$ together are an alkylene chain having 2, 4 or 5 carbon atoms, in which one $CH_2$ group can optionally be replaced by O, NH or N—($C_1$—$C_4$)-alkyl;

$R^5$ and $R^6$ independently of one another are H or ($C_1$—$C_4$)-alkyl;

X and Y independently of one another are O or S;

$R^7$ and $R^8$ independently of one another are ($C_1$—$C_6$)-alkyl which can be substituted by halogen, ($C_1$—$C_4$)-alkoxy or phenyl;

$R^9$ and $R^{10}$ independently of one another are H or ($C_1$—$C_6$)-alkyl which can be substituted by halogen, OH or ($C_1$—$C_6$)-alkoxy;

$R^{11}$ is H or ($C_1$—$C_6$)-alkyl;

$R^{12}$ is ($C_1$—$C_6$)-alkyl and

W is OH, O-benzyl (optionally substituted by Cl or $CH_5$) or

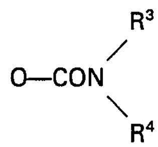

2. A process for the protection of crop plants against the phytotoxic side effects of fenoxaprop-ethyl, which comprises applying the compounds according to claim 1 before, after or at the same time as fenoxaprop-ethyl to the plants, parts of plants or fertile soils for plants which are to be treated.

3. The process as claimed in claim 2, wherein the ratio of safener to fenoxaprop-ethyl is within the range between 0.1:1 and 5:1.

4. The process as claimed in claim 2, wherein the crop plants are a species of cereal, rice, maize, sorghum, cotton, sugar beet, sugar cane or soya.

5. The process as claimed in claim 2, wherein the crop plants are wheat, barley or maize.

6. A plant treatment agent which contains (a) a compound of the formula I as claimed in claim 1 and (b) fenoxaprop-ethyl.

7. A plant treatment agent as claimed in claim 6, wherein the ratio of (a) to (b) is 0.1:1 to 5:1.